(19) Europäisches Patentamt
European Patent Office
Office européen des brevets

(11) **EP 1 400 148 B1**

(12) **EUROPEAN PATENT SPECIFICATION**

(45) Date of publication and mention of the grant of the patent:
**16.05.2007 Bulletin 2007/20**

(51) Int Cl.:
***H04Q 7/38*** (2006.01)

(21) Application number: **02756322.0**

(86) International application number:
**PCT/US2002/020374**

(22) Date of filing: **25.06.2002**

(87) International publication number:
**WO 2003/003785 (09.01.2003 Gazette 2003/02)**

(54) **METHOD AND APPARATUS FOR MANAGEMENT OF AN ADAPTIVE SET OF BASE STATIONS IN A COMMUNICATION SYSTEM**

VERFAHREN UND GERÄT FÜR EIN ANPASSUNGSFÄHIGES VERWALTEN EINES SETS von Basisstationen IN EINEM KOMMUNIKATIONSSYSTEM

PROCEDE ET APPAREIL POUR UNE GESTION ADAPTATIVE D'UN ENSEMBLE DES STATIONS DE BASE DANS UN SYSTEME DE COMMUNICATION

(84) Designated Contracting States:
**AT BE CH CY DE DK ES FI FR GB GR IE IT LI LU MC NL PT SE TR**

(30) Priority: **26.06.2001 US 892378**
**08.11.2001 US 7301**

(43) Date of publication of application:
**24.03.2004 Bulletin 2004/13**

(73) Proprietor: **QUALCOMM INCORPORATED**
**San Diego, CA 92121-1714 (US)**

(72) Inventors:
• **ATTAR, Rashid, Ahmed**
**San Diego, CA 92122 (US)**
• **VIJAYAN, Rajiv**
**San Diego, CA 92129 (US)**
• **SINDHUSHAYANA, Nagabhushana, T.**
**San Diego, CA 92129 (US)**

(74) Representative: **Wagner, Karl H.**
**Wagner & Geyer,**
**Patentanwälte,**
**Gewürzmühlstrasse 5**
**80538 München (DE)**

(56) References cited:
**EP-A- 0 905 920**    **WO-A-00/79809**
**WO-A-95/12297**    **WO-A-99/09660**
**US-A- 5 886 988**

EP 1 400 148 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**BACKGROUND**

**CROSS REFERENCE**

This application is a continuation-in-part of co-pending Application Serial No. 09/892,378, filed June 26, 2001, entitled "Method and Apparatus for Selecting a Serving Sector in a Data Communication System" and currently assigned to the assignee of the present application.

**Field**

The present invention relates generally to communication systems, and more specifically to a method and an apparatus for an adaptive set management in a communication system.

**Background**

Communication systems have been developed to allow transmission of information signals from an origination station to a physically distinct destination station. In transmitting information signal from the origination station over a communication channel, the information signal is first converted into a form suitable for efficient transmission over the communication channel. Conversion, or modulation, of the information signal involves varying a parameter of a carrier wave in accordance with the information signal in such a way that the spectrum of the resulting modulated carrier is confined within the communication channel bandwidth. At the destination station the original information signal is replicated from the modulated carrier wave received over the communication channel. Such a replication is generally achieved by using an inverse of the modulation process employed by the origination station.

Modulation also facilitates multiple-access, i.e., simultaneous transmission and/or reception, of several signals over a common communication channel. Multiple-access communication systems often include a plurality of remote subscriber units requiring intermittent service of relatively short duration rather than continuous access to the common communication channel. Several multiple-access techniques are known in the art, such as time division multiple-access (TDMA), frequency division multiple-access (FDMA), and amplitude modulation multiple-access (AM). Another type of a multiple-access technique is a code division multiple-access (CDMA) spread spectrum system that conforms to the "TIA/EIA/IS-95 Mobile Station-Base Station Compatibility Standard for Dual-Mode Wide-Band Spread Spectrum Cellular System," hereinafter referred to as the IS-95 standard. The use of CDMA techniques in a multiple-access communication system is disclosed in U.S. Patent No. 4,901,307, entitled "SPREAD SPECTRUM MULTIPLE-ACCESS COMMUNICATION SYSTEM USING SATELLITE OR TERRESTRIAL REPEATERS," and U.S. Patent No. 5,103,459, entitled "SYSTEM AND METHOD FOR GENERATING WAVEFORMS IN A CDMA CELLULAR TELEPHONE SYSTEM," both assigned to the assignee of the present invention.

A multiple-access communication system may be a wireless or wire-line and may carry voice and/or data. An example of a communication system carrying both voice and data is a system in accordance with the IS-95 standard, which specifies transmitting voice and data over the communication channel. A method for transmitting data in code channel frames of fixed size is described in detail in U.S. Patent No. 5,504,773, entitled "METHOD AND APPARATUS FOR THE FORMATTING OF DATA FOR TRANSMISSION", assigned to the assignee of the present invention. In accordance with the IS-95 standard, the data or voice is partitioned into code channel frames that are 20 milliseconds wide with data rates as high as 14.4 Kbps. Additional examples of a communication systems carrying both voice and data comprise communication systems conforming to the "3rd Generation Partnership Project" (3GPP), embodied in a set of documents including Document Nos. 3G TS 25.211, 3G TS 25.212, 3G TS 25.213, and 3G TS 25.214 (the W-CDMA standard), or "TR-45.5 Physical Layer Standard for cdma2000 Spread Spectrum Systems" (the IS-2000 standard).

In a multiple-access communication system, communications between users are conducted through one or more base stations. A first user on one subscriber station communicates to a second user on a second subscriber station by transmitting data on a reverse link to a base station. The base station receives the data and can route the data to another base station. The data is transmitted on a forward link of the same base station, or the other base station, to the second subscriber station. The forward link refers to transmission from a base station to a subscriber station and the reverse link refers to transmission from a subscriber station to a base station. Likewise, the communication can be conducted between a first user on one mobile subscriber station and a second user on a landline station. A base station receives the data from the user on a reverse link, and routes the data through a public switched telephone network (PSTN) to the second user. In many communication systems, e.g., IS-95, W-CDMA, IS-2000, the forward link and the reverse link are allocated separate frequencies.

An example of a data only communication system is a high data rate (HDR) communication system that conforms to the TIA/EIA/IS-856 industry standard, hereinafter referred to as the IS-856 standard. This system in accordance with the IS-856 standard is based on a communication system disclosed in US Patent 6 574 211 (co-pending application serial number 08/963,386), entitled "METHOD AND APPARATUS FOR HIGH RATE PACKET DATA TRANSMISSION," filed 11/3/1997, assigned to the assignee of the present invention. The communication system in accordance with the IS-856 standard defines a set of data rates, ranging from 38.4 kbps to 2.4 Mbps, at which an access point (AP) may send data to a subscriber station (access terminal, AT). Because the AP is analogous to a base station, the terminology with respect to cells and sectors is the same as with respect to voice systems.

A significant difference between voice services and data services is the fact that the former imposes stringent and fixed delay requirements. Typically, the overall one-way delay of speech frames must be less than 100 ms. In contrast, the data delay can become a variable parameter used to optimize the efficiency of the data communication system. Specifically, more efficient error correcting coding techniques which require significantly larger delays than those that can be tolerated by voice services can be utilized. An exemplary efficient coding scheme for data is disclosed in U.S. Patent 5 933 462 (Application Serial No. 08/743,688), entitled "SOFT DECISION OUTPUT DECODER FOR DECODING CONVOLUTIONALLY ENCODED CODEWORDS", filed November 6, 1996, assigned to the assignee of the present invention.

Another significant difference between voice services and data services is that the former requires a fixed and common grade of service (GOS) for all users. Typically, for digital systems providing voice services, this translates into a fixed and equal transmission rate for all users and a maximum tolerable value for the error rates of the speech frames. In contrast, for data services, the GOS can be different from user to user and can be a parameter optimized to increase the overall efficiency of the data communication system. The GOS of a data communication system is typically defined as the total delay incurred in the transfer of a pre-determined amount of data, hereinafter referred to as a data packet.

Yet another significant difference between voice services and data services is that the former requires a reliable communication link. When a mobile station, communicating with a first base station, moves to the edge of the associated cell or sector, the mobile station initiates a simultaneous communication with a second base station. This simultaneous communication, when the mobile station receives a signal carrying equivalent information from two base stations, termed soft hand-off, is a process of establishing a communication link with the second base station while maintaining a communication link with the first base station. When the mobile station eventually leaves the cell or sector associated with the first base station, and breaks the communication link with the first base station, it continues the communication on the communication link established with the second base station. Because the soft hand-off is a "make before break" mechanism, the soft-handoff minimizes the probability of dropped calls. The method and system for providing a communication with a mobile station through more than one base station during the soft hand-off process are disclosed in U.S. Patent No. 5,267,261, entitled "MOBILE ASSISTED SOFT HAND-OFF IN A CDMA CELLULAR TELEPHONE SYSTEM," assigned to the assignee of the present invention. Softer hand-off is the process whereby the communication occurs over multiple sectors that are serviced by the same base station. The process of softer hand-off is described in detail in copending U.S. Patent 5 933 787 (Application Serial No. 08/763,498), entitled "METHOD AND APPARATUS FOR PERFORMING HAND-OFF BETWEEN SECTORS OF A COMMON BASE STATION", filed December 11, 1996, assigned to the assignee of the present invention. Thus, both soft and softer hand-off for voice services result in redundant transmissions from two or more base stations to improve reliability.

This additional reliability is not required for data transmission because the data packets received in error can be retransmitted. For data services, the parameters, which measure the quality and effectiveness of a data communication system, are the transmission delay required to transfer a data packet and the average throughput rate of the system. Transmission delay does not have the same impact in data communication as in voice communication, but the transmission delay is an important metric for measuring the quality of the data communication system. The average throughput rate is a measure of the efficiency of the data transmission capability of the communication system. Consequently, the transmit power and resources used to support soft hand-off can be more efficiently used for transmission of additional data. To maximize the throughput, the transmitting sector should be chosen in a way that maximizes the forward link throughput as perceived by the AT.

The throughput of a communication system may be negatively affected by an imbalance between a forward link and a reverse link. There is, therefore, a need in the art for a method and an apparatus for minimizing such an imbalance.

Attention is drawn to WO 95 12297 which describes a plurality of methods for achieving the soft or softer handoff process such that the performance of a system is improved. A first method is based on delaying the softer handoff process. A second method is based on reducing the power of transmissions from the sector having the weakest signal strength. A third method is based on eliminating transmissions from the sector having the weakest signal strength. A fourth method adds a new base station or sector only when the mobile unit is in need of additional power to operate properly. In all four methods, reverse link demodulation in each sector may continue with or without the transmission of the forward link. In all four methods the operation could be based on the signal strength of the reverse link signal or the forward link. It is also possible to combine two or more of these methods to create a hybrid method.

WO 00 79809 discloses a communications system that provides a method and apparatus for assigning to a mobile station at least a forward communication channel from each sector of a cell in the communication system, assigning orthogonal spreading codes to the least assigned channels, adjusting a transmit gain of at least one of the channels assigned to zero or very low transmit gain, and placing each sector of the cell that has at least one assigned channel in an active channel set at the mobile station.

Further attention is drawn to EP 0 905 920 which describes a communications system that achieves high bit rates over an actual communications channel between M transmitter antennas of a first unit and N receiver antennas of a second unit, where M or N>1, by creating virtual sub-channels from the actual communications channel. The multiple antenna system creates the virtual sub-channels from the actual communications channel by using propagation information characterizing the actual communications channel at the first and second units. For transmissions from the first unit to the second unit, the first unit sends a virtual transmitted signal over at least a subset of the virtual sub-channels using at least a portion of the propagation information. The second unit retrieves a corresponding virtual received signal from the same set of virtual sub-channels using at least another portion of said propagation information.

## SUMMARY

In accordance with the present invention a method for managing a list of sectors capable of communication with a subscriber station in a communication system as set forth in claim 1, an apparatus for managing a list of sectors capable of communication with a subscriber station in a communication system as set forth in claim 12, a method for power controlling a subscriber station as set forth in claim 22 and an apparatus for power controlling a subscriber station as set forth in claim 25 is provided. Preferred embodiments of the invention are disclosed in the dependent claims.

## BRIEF DESCRIPTION OF THE DRAWINGS

**FIG.1** illustrates a conceptual diagram of a communication system capable of performing re-pointing in accordance with embodiments of the present invention, e.g., a communication system in accordance with the IS-856 standard;

FIG. 2 illustrates an exemplary forward link waveform;

## DETAILED DESCRIPTION

### Definitions

The word "exemplary" is used exclusively herein to mean "serving as an example, instance, or illustration." Although a best mode embodiment is contained herein, an embodiment described as "exemplary" is not necessarily to be construed as preferred or advantageous over other embodiments.

The term packet is used exclusively herein to mean a group of bits, including data (payload) and control elements, arranged into a specific format. The control elements comprise, e.g., a preamble, a quality metric, and others known to one skilled in the art. Quality metric comprises, e.g., a cyclical redundancy check (CRC), a parity bit, and others known to one skilled in the art.

The term access network is used exclusively herein to mean a collection of access points (AP) and one or more access point controllers. The access network transports data packets between multiple access terminals (AT). The access network may be further connected to additional networks outside the access network, such as a corporate Intranet or the Internet, and may transport data packets between each access terminal and such outside networks.

The term base station, referred to herein as an AP in the case of a communication system in accordance with the IS-856 standard, is used exclusively herein to mean the hardware with which subscriber stations communicate. Cell refers to the hardware or a geographic coverage area, depending on the context in which the term is used. A sector is a partition of a cell. Because a sector has the attributes of a cell, the teachings described in terms of cells are readily extended to sectors.

The term subscriber station, referred to herein as an AT in the case of a communication system in accordance with the IS-856 standard, is used herein to mean the hardware with which an access network communicates. An AT may be mobile or stationary. An AT may be any data device that communicates through a wireless channel or through a wired channel, for example using fiber optic or coaxial cables. An AT may further be any of a number of types of devices including but not limited to PC card, compact flash, external or internal modem, or wireless or wireline phone. An AT that is in the process of establishing an active traffic channel connection with an AP is said to be in a connection setup state. An AT that has established an active traffic channel connection with an AP is called an active AT, and is said to be in a traffic state.

The term communication channel/link is as used herein to mean a single route over which a signal, is transmitted described in terms of modulation characteristics and coding, or a single route within the protocol layers of either the AP or the AT.

The term reverse channel/link is as used herein means a communication channel/link through which the AT sends signals to the AP.

A forward channel/link is as used herein to mean a communication channel/link through which an AP sends signals to an AT.

The term soft hand-off is as used herein to mean a communication between a subscriber station and two or more sectors, wherein each sector belongs to a different cell. In the context of IS-95 standard, the reverse link communication is received by both sectors, and the forward link communication is simultaneously carried on the two or more sectors' forward links. In the context of the IS-856 standard, data transmission on the forward link is non-simultaneously carried out between one of the two or more sectors and the AT.

The term softer hand-off is as used herein to mean a communication between a subscriber station and two or more sectors, wherein each sector belongs to the same cell. In the context of the IS-95 standard, the reverse link communication is received by both sectors, and the forward link communication is simultaneously carried on one of the two or more sectors' forward links. In the context of the IS-856 standard, data transmission on the forward link is non-simultaneously carried out between one of the two or more sectors and the AT.

The term re-pointing is as used herein to mean a selection of a sector that is a member of AT's active list, wherein the sector is different than a currently selected sector.

The term serving sector is as used herein to mean a sector that a particular AT selected for data communication or a sector that is communicating data to the particular AT.

The term soft/softer hand-off delay is as used herein to indicate the minimum interruption in service that a subscriber station would experience following a handoff to another sector. Soft/Softer handoff delay is determined based on whether the sector, (currently not serving the subscriber station), (non-serving sector) to which the subscriber station is re-pointing is part of the same cell as the current serving sector. If the non-serving sector is in the same cell as the serving sector then the softer handoff delay is used, and if the non-serving sector is in a cell different from the one that the serving sector is part of then the soft-handoff delay is used.

The term non-homogenous soft/softer hand-off delay is as used herein to indicate that the soft/softer hand-off delays are sector specific and therefore may not uniform across the sectors of an Access Network.

The term credit is as used herein to mean a dimensionless attribute indicating a reverse link quality metric, a quality metric of a forward link, or a composite quality metric of both forward and reverse links.

The term erasure is as used herein to mean failure to recognize a message.

The term outage is as used herein to mean a time interval during which the likelihood that a subscriber station will receive service is reduced.

The term fixed rate mode is as used herein to mean that a particular sector transmits a Forward Traffic Channel to the AT at one particular rate.

Description

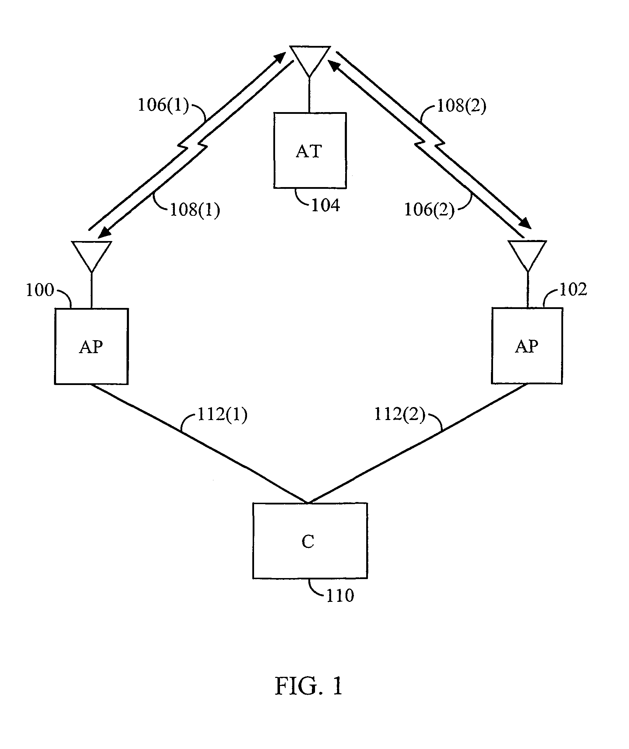

**FIG.1** illustrates a conceptual diagram of a communication system capable of performing re-pointing in accordance with embodiments of the present invention, e.g., a communication system in accordance with the IS-856 standard. An AP **100** transmits data to an AT **104** over a forward link **106(1),** and receives data from the AT **104** over a reverse link **108(1).** Similarly, an AP **102** transmits data to the AT **104** over a forward link **106(2),** and receives data from the AT **104** over a reverse link **108(2).** In accordance with one embodiment, data transmission on the forward link occurs from one AP to one AT at or near the maximum data rate that can be supported by the forward link and the communication system. Other channels of the forward link, e.g., control channel, may be transmitted from multiple AP's to one AT. Reverse link data communication may occur from one AT to one or more AP's. The AP **100** and the AP **102** are connected to a controller **110** over backhauls **112(1)** and **112(2).** The term backhaul is used to mean a communication link between a controller and an AP. Although only two AT's and one AP are shown in **FIG. 1,** one of ordinary skill in the art recognizes that this is for pedagogical purposes only, and the communication system can comprise a plurality of AT's and AP's.

Initially, the AT **104** and one of the AP's, e.g., the AP **100,** establish a communication link using a pre-determined access procedure. In this connected state, the AT **104** is able to receive data and control messages from the AP **100,** and is able to transmit data and control messages to the AP **100.** The AT **104** continually searches for other AP's that could be added to the AT **104** active set. The active set comprises a list of the AP's capable of communication with the AT **104.** When such an AP is found, the AT **104** calculates a quality metric of the AP's forward link, which in accordance with one embodiment comprises a signal-to-interference and-noise ratio (SINR). In accordance with one embodiment, the AT **104** searches for other APs and determines the AP's SINR in accordance with a pilot signal. Simultaneously, the AT **104** calculates the forward link quality metric for each AP in the AT **104** active set. If the forward link quality metric from a particular AP is above a pre-determined add threshold or below a pre-determined drop threshold for a pre-determined period of time, the AT **104** reports this information to the AP 100. Subsequent messages from the AP **100** direct the AT **104** to add to or to delete from the AT **104** active set the particular AP.

The AT **104** selects a serving AP from the active set based on a set of parameters. The set of parameters can comprise present and previous SINR measurements, a bit-error-rate and/or a packet-error-rate, and other parameters known to one skilled in the art. In accordance with one embodiment, the serving AP is selected in accordance with the largest SINR measurement. The AT **104** then transmits to the selected AP a data request message (DRC message) on the data request channel (DRC channel). The DRC message can contain the requested data rate or, alternatively, an indication of the quality of the forward link, e.g., the measured SINR, the bit-error-rate, or the packet-error-rate. In accordance with one embodiment, the AT 104 can direct the transmission of the DRC message to a specific AP by the use of a Walsh code, which uniquely identifies the specific AP. The DRC message symbols are exclusively OR'ed (XOR) with the unique Walsh code. The XOR operation is referred to as Walsh covering of a signal. Since each AP in the active set of the AT **104** is identified by a unique Walsh code, only the selected AP which performs the identical XOR operation as that performed by the AT **104** with the correct Walsh code can correctly decode the DRC message.

The data to be transmitted to the AT **104** arrive at the controller **110.** In accordance with one embodiment, the controller **110** sends the data to all APs in AT **104** active set over the backhaul **112.** In another embodiment, the controller **110** first determines, which AP was selected by the AT **104** as the serving AP, and then sends the data to the serving AP. The data are stored in a queue at the AP(s). A paging message is then sent by one or more APs to the AT **104** on respective control channels. The AT **104** demodulates and decodes the signals on one or more control channels to obtain the paging messages.

At each time time-slot, the AP can schedule data transmission to any of the ATs that received the paging message. An exemplary method for scheduling transmission is described in U.S. Patent No. 6,229,795, entitled "SYSTEM FOR ALLOCATING RESOURCES IN A COMMUNICATION SYSTEM," assigned to the assignee of the present invention. The AP uses the rate control information received from each AT in the DRC message to efficiently transmit forward link data at the highest possible rate. In accordance with one embodiment, the AP determines the data rate at which to transmit the data to the AT **104** based on the most recent value of the DRC message received from the AT **104.** Additionally, the AP uniquely identifies a transmission to the AT **104** by using a spreading code which is unique to that mobile station. In the exemplary embodiment, this spreading code is the long pseudo noise (PN) code, which is defined by the IS-856 standard.

The AT **104,** for which the data packet is intended, receives the data transmission and decodes the data packet. In accordance with one embodiment, each data packet is associated with an identifier, e.g. a sequence number, which is used by the AT **104** to detect either missed or duplicate transmissions. In such an event, the AT **104** communicates via the reverse link data channel the sequence numbers of the missing data units. The controller **110,** which receives the data messages from the AT **104** via the AP communicating with the AT **104,** then indicates to the AP what data units were not received by the AT **104.** The AP then schedules a retransmission of such data units.

When the communication link between the AT **104** and the AP **100,** operating in the variable rate mode, deteriorates below required reliability level, the AT **104** first attempts to determine whether communication with another AP in the variable rate mode supporting an acceptable rate data is possible. If the AT **104** ascertains such an AP (e.g., the AP **102),** a re-pointing to the AP **102,** therefore, to a different communication link occurs, and the data transmissions continue from the AP **102** in the variable rate mode. The above-mentioned deterioration of the communication link can be caused by, e.g., the AT **104** moving from a coverage area of the AP **100** to the coverage area of the AP **102,** shadowing, fading, and other reasons known to one skilled in the art. Alternatively, when a communication link between the AT **104** and another AP (e.g., the AP **102)** that may achieve higher throughput rate that the currently used communication link becomes available, a re-pointing to the AP **102,** therefore, to a different communication link occurs, and the data transmissions continue from the AP **102** in the variable rate mode. If the AT **104** fails to detect an AP that can operate in the variable rate mode and support an acceptable data rate, the AT **104** transitions into a fixed rate mode.

In accordance with one embodiment, the AT **104** evaluates the communications links with all candidate APs for both variable rate data and fixed rate data modes, and selects the AP, which yields the highest throughput.

The AT **104** will switch from the fixed rate mode back to the variable rate mode if the sector is no longer a member of the AT **104** active set.

In the exemplary embodiment, the above described the fixed rate mode and associated methods for transition to and from the fixed mode are similar to those disclosed in detail in U.S. Application No. 6,205,129, entitled " METHOD AND APPARATUS FOR VARIABLE AND FIXED FORWARD LINK RATE CONTROL IN A MOBILE RADIO COMMUNICATION SYSTEM ", assigned to the assignee of the present invention. Other fixed rate modes and associated methods for transition to and from the fixed mode can also be contemplated and are within the scope of the present invention.

One skilled in the art recognizes that an AP can comprise one or more sectors. In the description above, the term AP was used generically to allow clear explanation of basic concepts of the communication system illustrates a conceptual diagram of a communication system capable of performing re-pointing in accordance with embodiments of the present invention, e.g., a communication system in accordance with the IS-856 standard. However, one skilled in the art can extend the explained concepts to AP comprising any number of sectors. Consequently, the concept of sector will be used throughout the rest of the document.

**Forward Link Structure**

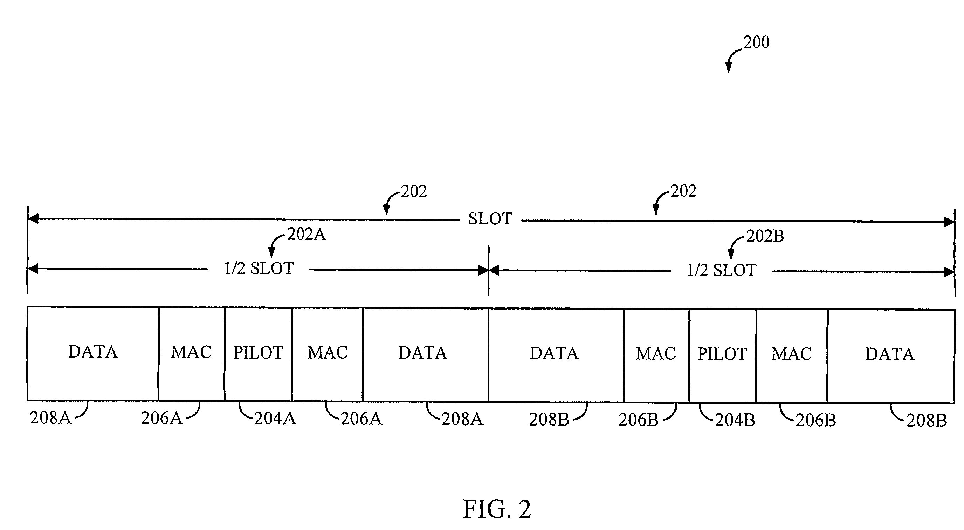

**FIG. 2** illustrates an exemplary forward link waveform **200.** For pedagogical reasons, the waveform **200** is modeled after a forward link waveform of the above-mentioned communication system in accordance with the IS-856 standard. However, one of ordinary skill in the art will understand that the teaching is applicable to different waveforms. Thus, for example, in accordance with one embodiment, the waveform does not need to contain pilot signal bursts, and the pilot signal can be transmitted on a separate channel, which can be continuous or bursty. The forward link **200** is defined in terms of frames. A frame is a structure comprising 16 time-slots **202;** each time-slot **202** being 2048 chips long, corresponding to 1.66 ms. time-slot duration, and, consequently, 26.66 ms. frame duration. Each time-slot **202** is divided into two half-time-slots **202a, 202b,** with pilot bursts **204a, 204b** transmitted within each half-time-slot **202a, 202b.** In the exemplary embodiment, each pilot burst **204a, 204b** is 96 chips long, and is centered at the mid-point of its associated half-time-slot **202a, 202b.** The pilot bursts **204a, 204b** comprise a pilot channel signal covered by a Walsh cover with index 0. A forward medium access control channel (MAC) **206** forms two bursts, which are transmitted immediately before and immediately after the pilot burst **204** of each half-time-slot **202.** In the exemplary embodiment, the MAC is composed of up to 64 code channels, which are orthogonally covered by 64-ary Walsh codes. Each code channel is identified by a MAC index, which has a value between 1 and 64, and identifies a unique 64-ary Walsh cover. One of the available MAC indices between 5 and 63 is used for reverse link power control (RLPC) for each subscriber station. The reverse link power control is modulated on a reverse power control channel (RPC). MAC index 4 is used for a reverse activity channel (RA), which performs load control on the reverse traffic channel. The forward link traffic channel and control channel payload is sent in the remaining portions **208a** of the first half-time-slot **202a** and the remaining portions **208b** of the second half-time-slot **202b.**

As discussed, the RPC channel is used to send the power control commands, which are used to control the transmit power of the reverse link transmission from an AT. Power control is critical on the reverse link because the transmit power of each AT is an interference to other ATs in the communication system. To minimize interference on the reverse link and maximize capacity, the transmit power of each AT is controlled by two power control loops. In one embodiment, the power control loops are similar to that of the CDMA system disclosed in detail in U.S. Patent No. 5,056,109, entitled "METHOD AND APPARATUS FOR CONTROLLING TRANSMISSION POWER IN A CDMA CELLULAR MOBILE TELEPHONE SYSTEM", assigned to the assignee of the present invention. Other power control mechanism can also be contemplated and are within the scope of the present invention.

The first (open) power control loop sets a level at which a reverse link quality metric is to be maintained. The signal quality is measured as the energy-per-bit-to-noise-plus-interference ratio Eb/Io of the reverse link signal received at an AP. The set level is referred to as the Eb/Io set point. The open power control loop adjusts the set point such that the desired level of performance, as measured by the packet-error-rate (PER), is maintained. The second (closed) power control loop adjusts the transmit power of an AT such that the reverse link signal quality is maintained at the set level.

The closed loop power control for an AT is performed by all APs in the AT's Active Set. Within the closed loop, the Eb/Io of the reverse link signal is measured at each of the AP. Each AP then compares the measured Eb/Io with the set point. If the measured Eb/Io is greater than the set point, each AP transmits a power control message to AT to decrease the transmit power. Alternatively, if the measured Eb/Io is below the set point, each AP transmits a power control message to AT to increase the transmit power. In one embodiment, the power control message is implemented with one power control bit sent on the RPC channel (RPC bit). An AP transmits '0' ("up") RPC bit if the measured Eb/Io is below the set point, and '1' ("down") RPC bit if the measured Eb/Io is greater than the set point. The AT adjusts the AT's output power by increasing an output power if the RPC bits received from all controlling APs are '0' ("up"). If any RPC bit received from the controlling APs is '1' ("down"), the AT decreases the output power.

**Re-pointing with a Modified Set Management**

In a wireless communications system, e.g., a wireless communications system in accordance with **FIG. 1**, an imbalance may occur between a forward link and a reverse link. Imbalance occurs when a forward link quality metric of a first sector is greater than the forward link quality metric of a second sector as measured at an AT, and a quality metric of the AT's reverse link as measured at the first sector is less than a quality metric as measured at the second sector. It has been observed that low levels of imbalance, e.g., less than 1 dB are almost always present in a communication system. This level of imbalance appears to have little impact either on the forward link requested/served rate or on the DRC erasure rate on the reverse link. As used herein the term DRC erasure rate indicates a percentage of DRC messages that is erased at the AP. Consequently, such an imbalance is accepted because the cost, e.g., outage associated with re-pointing DRC's in a dynamic communication system environment (changing channel conditions, AT mobility), far exceeds the small penalty in forward link sector throughput that may result.

As the imbalance increases, the sector with the better forward link quality metric has a higher DRC erasure rate, due to worse reverse link quality metric. Consequently, the advantage of an AT pointing its DRC to a sector with a better forward link quality metric is reduced because the DRC erasure rate at the sector with the better forward link quality metric may be so large as to reduce the forward link throughput significantly. In an extreme case, if the DRC erasure rate is 100%, regardless of the forward link quality metric, the AT is not served. On the other hand, re-pointing the AT's DRC to a sector with a better reverse link quality metric may not improve the forward link throughput because the sector's forward link quality metric is reduced.

Because the actual forward link throughput that an AT achieves is a function of the data queues to the AT and forward link scheduling method, the forward link throughput cannot be known a priori. Therefore, a re-pointing method attempts to select the best sector assuming that data queues are full and that the scheduling method would select the AT for service. The re-pointing method further considers that from an AT standpoint, imbalance is an issue only if it degrades the AT's throughput by one rate on the forward link. For example, consider a static channel with the following conditions:

(i) sector 1 forward link quality metric FL1_SiNR is 3dB higher than sector 2 forward link quality metric FL2_StNR as measured by the AT. Therefore, in accordance with a relation between a forward link SINR and a rate of data, the forward link of sector 1 can support 614kB rate, and the forward link of sector 2 can support 307kB rate; and
(ii) a quality metric of the AT's reverse link as measured at sector 1, expressed as the reverse link pilot channel SINR (Ecp/Nt), RL1_Ecp/Nt is 3dB lower than a quality metric RL2_Ecp/Nt as measured at sector 2. Therefore, in accordance with a relation between a reverse link pilot channel SINR and a DRC erasure rate, the DRC erasure Rate of RL1 is 0.8, and the DRC erasure Rate of RL2 is 0.1.

Consequently, if the AT sends a DRC request message to sector 1 it receives a higher throughput if the AT is served, but the likelihood of the AT being served is less than or equal to 20% because the Erasure Rate of RL1 is 0.8. If the AT sends a DRC request message to sector 2, the AT receives a lower throughput if the AT is served, but the likelihood of it being served is greater than or equal to 90% because the Erasure Rate of RL2 is 0.1. Therefore, the throughput from sector 1 is 614kB * 0.2 = 122.8kB, and the throughput from sector 2 is 307k*0.9 = 276.3k. Clearly, the AT may gain from sending a DRC request message to sector 2.

Let us assume that in a communication system of FIG. 1, the forward link quality metric **106(1)** is greater than the quality metric of the forward link **106(2),** and the quality metric of the reverse link **108(1)** is less than the quality metric of the reverse link **108(2),** causing a severe imbalance as described above. As discussed, the AT utilizes a pre-determined add threshold and a pre-determined drop threshold for managing the ATs active set. In accordance with one embodiment, if the SINR of the forward link **106(2)** stays below the pre-determined drop threshold for a period equal to or greater than a pre-determined time period, the AT requests that the sector at AP **102** be removed from the AT active set. However, the above-discussed example illustrated that removing a sector may negatively affect throughput.

Therefore, set management method is implemented at the sectors. According to one embodiment, when the AT determines that a forward link quality metric for a sector fell below a drop threshold, the AT sends a. request via a Route Update message to the access network to remove the sector from the AT's active set. If the Access Network set management method determines that the reverse link associated with this forward link has a sufficient quality metric, the drop threshold for that sector is modified in accordance with a minimal threshold at which a desired data rate can be decoded. For example, in accordance with one embodiment, the minimal forward link SINR threshold for decoding the lowest data rate of 38.4 kbps equals -11.5 dB. Therefore, if reception of the data rate is 38.4 kbps the modified drop threshold is set to -12 dB.

In another embodiment, a change of the active set of the AT in response to the Route Update message is at the discretion of the AP. Therefore, when the AT determines that a forward link quality metric for a sector fell below a drop threshold, the AT sends a request via a Route Update message to the access network to remove the sector from the AT's active set. In order to preserve throughput, the access network set management method may determine that a reverse link associated with the forward link of the sector at AP **102** has a sufficient quality metric, and deny the request. By lowering the threshold, the AP **102** implicitly denies the AT's request to remove that AP from the active set. The AP's set management method retains the information of the AT request. Thus, if the associated reverse link SINR deteriorates, the AP's set management method may delete the particular pilot signal from the active set at a later instant even prior to another Route Update message from the AT, where the another Route Update message is sent on detecting other potential changes to the active set at the AT.

In accordance with the described embodiments of the set management method, the access network has discretion to modify a drop threshold for a sector. Alternatively, the access network has discretion to retain a sector in an AT's active set although the sector's forward link quality metric deteriorated. Both actions may have negative effect on reverse link power control by creating a severe imbalance. Referring back to **FIG. 1,** because the sector at the AP **100** experiences the reverse link **108(1)** with low quality metric, therefore, the sector sends "up" RPC bits. On the other hand, a sector at the AP **102** experiences reverse link **108(2)** with good quality metric, therefore, the sector sends "up" and "down" commands that will on average maintain the reverse link's quality metric. Because, as discussed, an AT decreases reverse link transmit power if one of all RPC bits is down, the reverse link transmit power of the AT **104** is effectively controlled by the sector AP 100 with lower forward link quality metric.

The power required for an RPC bit intended for ATs power controlled by a sector differ in accordance with the quality metric of the sector's forward link as measured at each of the ATs. An AT, receiving the forward link with better quality metric requires less power than an AT, receiving the forward link with worse quality metric. An allocation algorithm using DRC information to allocate power among the different ATs in proportion to the ATs' forward link quality metric is disclosed in detail in a copending application, publication number US 667 257 entitled "METHOD AND APPARATUS FOR ALLOCATION OF POWER TO BASE STATION CHANNELS", filed September 25, 2000, assigned to the assignee of the present invention. Because the sum of the powers of all medium access control channels is finite, the power allocated for the RPC bit to the AT experiencing low quality metric of a sector's forward link can be insufficient for a reliable reverse link power control.

Consequently, a reverse link power control may be negatively affected, if a sector retained in the AT's active list does not have enough power to allocate to the RPC bit for the AT. Therefore, in one embodiment, when the access network receives a request to remove a sector from an AT's active set, and the access network determines if an imbalance that would affect power control exists. If the access network further determines that denying the request may increase throughput, the access network power controls the AT in accordance with an embodiment of the invention. One skilled in the art appreciates, that although the set management method has been described as triggered by a request to remove a sector from an AT's list, such was only for tutorial purposes. For example, the access network may monitor throughput and an effect of imbalance on throughput and take an action before the request to remove a sector occurs.

Referring back to **FIG. 1**, it was discussed that the reverse link transmit power of the AT **104** is effectively controlled by the sector at the AP **100** with lower forward link quality metric. Because, as discussed, the RPC bits controlling the reverse link transmit power of the AT **104** may have insufficient power, thus result in incorrect reverse link transmit power control, therefore, a decreased capacity. Consequently, in one embodiment, the access network directs the sector at the AP **100** to disregard the DRC of the reverse link **108(1)** and provides the sector at the AP **100** with RPC bits determined by the reverse link **108(2).**

One of ordinary skills in the art understands that extension to more than two sectors yields more variants. For example, only the sector with the highest forward link quality metric may be provided the power control commands from the reverse link with the highest quality metric. In another example, the two sectors with the highest forward link quality metric may be provided the power control commands from the reverse link with the highest quality metric. All these variants are contemplated as being within the scope of the present invention.

In one embodiment, the imbalance is determined by evaluating for each frame and each pair of sectors, power controlling an AT, quality metrics of the forward links and quality metrics of the reverse links. Imbalance is declared if the following equations are satisfied for *n* frames out of m frames.

$$FLQM\_Sector(i) > FLQM\_Sector(j) + \Delta QMFL \qquad (1)$$

$$RLQM\_Sector(i) < RLQM\_Sector(j) + \Delta QMRL \qquad (2)$$

where: *FLQM_Sector*(i) is a forward link quality metric of the i-th sector;
*RLQM_Sector*(i) is a reverse link quality metric of the i-th sector;
$\Delta QMFL$ is a predetermined value a forward link quality metric; and
$\Delta QMRL$ is a predetermined value a reverse link quality metric.

One of ordinary skills in the art appreciates that a choice of 'n' and '*m*' is communication system dependent. Furthermore, other methods for determining imbalance are equally applicable, and can be utilized without departing from the scope of the invention.

One skilled in the art will appreciate that the effects of the link imbalance and the method of adjusting of the pre-determined drop threshold has been described with respect to a communication system of **FIG. 1** for pedagogical purposes only. The effects of link imbalance affect every communications system utilizing soft handoff, regardless of whether the communications system is for data services, voice services or both. Consequently, the above-disclosed method can be utilized as long as the management of sectors, equivalent to management of active set, is employed by the communication system. Consequently, such communication system includes, but is not limited to, systems in accordance with the IS-95 standards, the W-CDMA standard, and the IS-2000 standard.

Those of ordinary skill in the art will recognize that although the various embodiments were described in terms of flowcharts and methods, such was done for pedagogical purposes only. The methods can be performed by an apparatus, which in one embodiment comprises a processor interfaced with a transmitter, a receiver and any other appropriate blocks of the AT and/or AP.

Those of ordinary skills in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features as claimed.

A portion of the disclosure of this patent document contains material, which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

**Claims**

1. A method for managing a list of sectors capable of communication with a subscriber station (104) in a communication system, comprising:

   receiving a request to remove a sector (100, 102) from the subscriber station's list;
   determining a reverse link quality metric from the subscriber station (104) at the sector (100, 102);
   retaining the sector (100, 102) in the subscriber station's list if said determined reverse link quality metric is sufficient;
   **characterised by**
   determining whether an imbalance exists when the sector is retained in the subscriber station's list;
   wherein said retaining the sector (100, 102) in the subscriber station's list If said determined reverse link quality metric is sufficient comprises:
   determining a forward link quality metric at which a rate of data can be decoded; and

setting a forward link quality metric threshold for the sector (100, 102) in accordance with said determined forward link quality metric;

wherein said determining whether an imbalance exists comprises:

measuring at each sector (100, 102) belonging to the list reverse link quality metrics of the subscriber station (104),

determining at each sector (100, 102) belonging to the list said quality metric of a forward link transmitted by the sector to the subscriber station; and

declaring an Imbalance if:

the forward link quality metric of one of the plurality of sectors is greater than a forward link quality of the rest of the plurality sectors by a first threshold; and

said measured reverse link quality metric at the one of the plurality is less than said measured reverse link quality at the rest of the plurality sectors by a second threshold,

transmitting from at least the sector with the highest forward link quality metric a power control command determined in accordance with the highest reverse link quality metric if the imbalance exists.

2. The method as claimed in claim 1, wherein said retaining the sector (100, 102) in the subscriber station's list if said determined reverse link quality metric is sufficient comprises:

declining said received request to remove a sector (100, 102) from the subscriber station's list.

3. The method as claimed in claim 1, wherein said determining a forward link quality metric at which a rate of data can be decoded comprises:

determining a forward link quality metric at which a minimum rate of data can be decoded.

4. The method as claimed in claim 1 further comprising removing a sector (100, 102) from the subscriber station list if said determined reverse link quality metric is insufficient.

5. The method as claimed in claim 1 wherein the communication system comprises the communication system in accordance with IS-856 standard.

6. The method as claimed in claim 1 wherein the communication system comprises the communication system in accordance with IS-95 standard.

7. The method as claimed in claim 1 wherein the communication system comprises the communication system in accordance with wCDMA standard.

8. The method as claimed in claim 1 wherein the communication system comprises the communication system in accordance with IS-2000 standard.

9. The method as claimed in claim 1 wherein the communication system comprises the communication system in accordance with JSTD-008 standard.

10. The method as claimed in claim 1, further comprising:

communicating from the subscriber station (104) a request to remove the sector from the subscriber station list if said determined forward link quality metric is insufficient.

11. An apparatus for managing a list of sectors capable of communication with a subscriber station (104) in a communication system, comprising:

a receiver configured to:

receive a request to remove a sector (100, 102) from the subscriber station's list;

a processor communicatively coupled to said receiver, and

a storage medium communicatively coupled to said processor and containing a set of instructions executable by the processor to:

determine a reverse link quality metric;

retain the sector (100, 102) in the subscriber station list if said determined reverse link quality metric is sufficient;

**characterised by** the instructions to

determine whether an imbalance exists when the sector is retained in the subscriber station's list; and

wherein said set of instructions executable by the processor to retain the sector (100, 102) in the subscriber station's list if said determined reverse link quality metric is sufficient comprises a set of Instructions to: determine a forward link quality metric for the sector (100, 102) at which a rate of data can be decoded; and set a forward link quality metric threshold in accordance with said determined forward link quality metric; wherein said set of instructions executable by the processor determine whether an imbalance exists comprises a set of instructions to:

determine at each sector (100, 102) belonging to the list reverse link quality metrics of the subscriber station;

determine at each sector (100, 102) belonging to the list said equality metric of a forward link transmitted by the sector (100, 102) to the subscriber station (104); and

declare an imbalance if:

the forward link quality metric of one of the plurality of sectors is greater than a forward link quality of the rest of the plurality sectors by a first threshold; and

said measured reverse link quality metric at the one of the plurality is less than said measured reverse link quality at the rest of the plurality sectors by a second threshold, provide to at least the sector with the highest forward link quality metric a power control command determined in accordance with the highest reverse link quality metric. if the imbalance exists then

12. The apparatus as claimed in claim 11, wherein said set of instructions executable by the processor to retain the sector (100, 102) in the subscriber station's list if said determined reverse link quality metric is sufficient comprises a set of instructions to:

decline said received request to remove a sector (100, 102) from the subscriber station's list.

13. The apparatus as claimed in claim 11, further comprising:

a second receiver configured to measure a forward link quality metric; and

a second transmitter communicatively coupled to said second receiver configured to communicate from the subscriber station to a sector request to remove the sector (100, 102) from the subscriber station list if said determined forward link quality metric is insufficient.

14. The apparatus as claimed in claim 11 further comprising removing a sector (100, 102) from the subscriber station list if said determined reverse link quality metric is insufficient.

15. The apparatus as claimed in claim 11 wherein the communication system comprises the communication system in accordance with IS-856 standard.

16. The apparatus as claimed in claim 11 wherein the communication system comprises the communication system in accordance with IS-95 standard.

17. The apparatus as claimed in claim 11 wherein the communication system comprises the communication system in accordance with wCDMA standard.

18. The apparatus as claimed in claim 11 wherein the communication system comprises the communication system in accordance with IS-2000 standard.

19. The apparatus as claimed in claim 14 wherein the communication system comprises the communication system In accordance with JSTD-008 standard.

20. A method for power controlling a subscriber station, comprising:

measuring at a plurality of sectors (100, 102) belonging to the subscriber station's list a reverse link quality metrics of the subscriber station (104).
determining at each of the sectors (100, 102) a quality metric of a forward link transmitted by the sector (100, 102) to the subscriber station (104);

**characterised by**

determining imbalance in accordance with said measured reverse link quality metrics, and said determined quality metrics of forward links; and
transmitting from the sector with the higher forward link quality metric a power control command determined in accordance with the higher reverse link quality metric if the imbalance exists;

wherein said determining imbalance in accordance with said measured reverse link quality metrics, and said determined quality metrics of forward links comprises:

declaring an imbalance if:

the forward link quality metric of one of the plurality of sectors is greater than a forward link quality of the rest of the plurality sectors by a first threshold; and
said measured reverse link quality metric at the one of the plurality is less than said measured reverse link quality at the rest of the plurality sectors by a second threshold.

21. The method as claimed in claim 20 wherein said transmitting from the sector with the highest forward link quality metric a power control command determined in accordance with the highest reverse link quality metric if the imbalance exists comprises:

transmitting from the sector with the highest forward link quality metric a power control command determined in accordance with the highest reverse link quality metric if the imbalance exists for a pro-determined time.

22. The method as claimed in claim 20 wherein said measuring at a plurality of sectors belonging to the subscriber station's list a reverse link quality metrics of the subscriber station (104) comprises:

measuring at a two of sectors (100, 102) belonging to the subscriber station's list a reverse link quality metrics of the subscriber station (104).

23. An apparatus for power controlling a subscriber station (104), comprising:

a processor communicatively coupled to said receiver; and
a storage medium communicatively coupled to said processor and containing a set of instructions executable by the processor to:

determine at each sector (100, 102) belonging to the list reverse link quality metrics of a subscriber station (104);
determine at each sector (100, 102) belonging to the list a quality metric of a forward link transmitted by the sector (100, 102) to the subscriber station (104) and
**characterised by** the instructions to
determine imbalance in accordance with said measured reverse link quality metrics, and said determined quality metrics of forward links: and
provide to at least the sector with the highest forward link quality metric a power control command determined in accordance with the highest reverse link quality metric;

wherein said set of instructions executable by the processor to determine imbalance in accordance with said measured reverse link quality metrics, and said determined quality metrics of forward links comprises a set of instructions to:

declaring an imbalance if:

the forward link quality metric of one of the plurality of sectors is greater than a forward link quality of the rest of the plurality sectors by a first threshold; and
said measured reverse link quality metric at the one of the plurality of sectors is less than said measured reverse link quality at the rest of the plurality sectors by a second threshold.

**24.** The apparatus as claimed in claim 23 wherein said set of instructions to provide to at least the sector with the highest forward link quality metric a power control command determined in accordance with the highest reverse link quality metric comprises a set of instruction to:

provide to at least the sector with the highest forward link quality metric a power control command determined in accordance with the highest reverse link quality metric if the imbalance exists for a pre-determined time.

**25.** The apparatus as claimed in claim 23 wherein said list consists of two sectors (100, 102).


**Patentansprüche**

**1.** Ein Verfahren zum Verwalten einer Liste mit Sektoren, die geeignet sind zur Kommunikation mit einer Teilnehmerstation (104) in einem Kommunikationssystem, wobei das Verfahren Folgendes aufweist:

Empfangen einer Anfrage zum Entfernen eines Sektors (100, 102) von der Liste der Teilnehmerstation;
Bestimmen einer Rückwärtsverbindungsqualitätsmetrik von der Teilnehmerstation (104) bei dem Sektor (100, 102);
Beibehalten des Sektors (100, 102) in der Liste der Teilnehmerstation falls die bestimmte Rückwärtsverbindungsqualitätsmetrik ausreichend ist;
**gekennzeichnet durch**
Bestimmen ob ein Ungleichgewicht existiert, wenn der Sektor in der Liste der Teilnehmerstation behalten wird; wobei das Beibehalten des Sektors (100, 102) in der Liste der Teilnehmerstation, falls die bestimmte Rückwärtsverbindungsqualitätsmetrik ausreichend ist, Folgendes aufweist:
Bestimmen einer Vorwärtsverbindungsqualitätsmetrik mit der eine Rate bzw. Geschwindigkeit von Daten decodiert werden kann; und
Einstellen bzw. Festlegen einer Vorwärtsverbindungsqualitätsmetrikschwelle für den Sektor (100, 102) gemäß der bestimmten Vorwärtsverbindungsqualitätsmetrik;
wobei das Bestimmen, ob ein Ungleichgewicht existiert Folgendes aufweist:
Messen, bei jedem Sektor (100, 102) der zu der Liste gehört, von Rückwärtsverbindungsqualitätsmetriken von der Teilnehmerstation (104);
Bestimmen bei jedem Sektor (100, 102) der zu der Liste gehört, die Qualitätsmetrik einer Vorwärtsverbindung, die **durch** den Sektor zu der Teilnehmerstation übertragen wird; und
Verkünden eines Ungleichgewichts, falls:
die Vorwärtsverbindungsqualitätsmetrik von einem der Vielzahl von Sektoren, um eine erste Schwelle größer ist als eine Vorwärtsverbindungsqualität von dem Rest der Vielzahl von Sektoren; und
die gemessene Rückwärtsverbindungsqualitätsmetrik bei dem einen von der Vielzahl, um eine zweite Schwelle weniger ist als die gemessene Rückwärtsverbindungsqualität bei dem Rest der Vielzahl von der Sektoren;
Übertragen, von mindestens dem Sektor mit der höchsten Vorwärtsverbindungsqualitätsmetrik, eines Leistungssteuerbefehls, der bestimmt wird, gemäß der höchsten Rückwärtsverbindungsqualitätsmetrik falls das Ungleichgewicht existiert.

**2.** Verfahren nach Anspruch 1, wobei das Beibehalten des Sektors (100, 102) in der Liste der Teilnehmerstation, falls die bestimmte Rückwärtsverbindungsqualitätsmetrik ausreichend ist, Folgendes aufweist:

Ablehnen der empfangenen Anfrage zum Entfernen eines Sektors (100, 102) von der Liste der Teilnehmerstation.

**3.** Verfahren nach Anspruch 1, wobei das Bestimmen einer Vorwärtsverbindungsqualitätsmetrik bei der eine Rate von Daten decodiert werden kann, Folgendes aufweist:

Bestimmen einer Vorwärtsverbindungsqualitätsmetrik bei der eine minimale Rate von Daten decodiert werden kann.

4. Verfahren nach Anspruch 1, das ferner Entfernen eines Sektors (100, 102) von der Liste der Teilnehmerstation aufweist, falls die bestimmte Rückwärtsverbindungsqualitätsmetrik ungenügend ist.

5. Verfahren nach Anspruch 1, wobei das Kommunikationssystem das Kommunikationssystem, gemäß einem IS-856 Standard aufweist.

6. Verfahren nach Anspruch 1, wobei das Kommunikationssystem das Kommunikationssystem gemäß einem IS-95 Standard aufweist.

7. Verfahren nach Anspruch 1, wobei das Kommunikationssystem das Kommunikationssystem gemäß einem WCDMA Standard aufweist.

8. Verfahren nach Anspruch 1, wobei das Kommunikationssystem das Kommunikationssystem gemäß einem IS-2000 Standard aufweist.

9. Verfahren nach Anspruch 1, wobei das Kommunikationssystem das Kommunikationssystem gemäß einem JSTD-008 Standard aufweist.

10. Verfahren nach Anspruch 1, das ferner Folgendes aufweist:

Kommunizieren bzw. Übermitteln von der Teilnehmerstation (104) eine Anfrage zum Entfernen des Sektors von der Liste der Teilnehmerstation, falls die bestimmte Vorwärtsverbindungsqualitätsmetrik ungenügend ist.

11. Eine Vorrichtung zum Verwalten einer Liste mit Sektoren, die geeignet ist, zur Kommunikation mit einer Teilnehmerstation (104), in einem Kommunikationssystem, die Folgendes aufweist:

einen Empfänger, der konfiguriert ist zum:
Empfangen einer Anfrage zum Entfernen eines Sektors (100, 102) von der Liste der Teilnehmerstation;
einen Prozessor, der kommunikativ bzw. in Nachrichtenverbindung mit dem Empfänger gekoppelt ist; und
ein Speichermedium, das kommunikativ mit dem Prozessor gekoppelt ist und einen Satz mit Instruktionen enthält, die durch den Prozessor ausführbar sind zum:
Bestimmen einer Rückwärtsverbindungsqualitätsmetrik;
Behalten des Sektors (100, 102) in der Liste der Teilnehmerstation, falls die bestimmte Rückwärtsverbindungsqualitätsmetrik ausreichend ist;
**gekennzeichnet durch** die Instruktionen zum Bestimmen, ob ein Ungleichgewicht existiert, wenn der Sektor in der Liste der Teilnehmerstation behalten wird; und
wobei der Satz mit Instruktionen **durch** den Prozessor ausführbar ist, zum Behalten des Sektors (100, 102) in der Liste der Teilnehmerstation, falls die bestimmte Rückwärtsverbindungsqualitätsmetrik ausreichend ist, einen Satz mit Instruktionen aufweist zum:
Bestimmen einer Vorwärtsverbindungsqualitätsmetrik für den Sektor (100, 102) bei der eine Rate bzw. Geschwindigkeit von Daten decodiert werden kann; und
Einstellen bzw. Anpassen einer Vorwärtsverbindungsqualitätsmetrikschwelle gemäß der bestimmten Vorwärtsverbindungsqualitätsmetrik;
wobei der Satz mit Instruktionen, der **durch** den Prozessor ausführbar ist, bestimmt, ob ein Ungleichgewicht existiert, einen Satz mit Instruktionen aufweist zum:
Bestimmen bei jedem Sektor (100, 102), der zu der Liste gehört, Rückwärtsverbindungsqualitätsmetriken von der Teilnehmerstation;
Bestimmen bei jedem Sektor (100, 102), der zu der Liste gehört, die Qualitätsmetrik einer Vorwärtsverbindung, die von dem Sektor (100, 102) an die Teilnehmerstation (104) übertragen wird; und
Verkünden eines Ungleichgewichts, falls:
die Vorwärtsverbindungsqualitätsmetrik von einem von der Vielzahl von Sektoren, um eine erste Schwelle größer ist als eine Vorwärtsverbindungsqualitätsmetrik von dem Rest der Vielzahl von Sektoren; und
die gemessene Rückwärtsverbindungsqualitätsmetrik bei einer von der Vielzahl, um eine zweite Schwelle weniger bzw. kleiner ist als die gemessene Rückwärtsverbindungsqualität bei dem Rest der Vielzahl von Sektoren;
falls das Ungleichgewicht existiert, dann Vorsehen für mindestens den Sektor mit der höchsten Vorwärtsverbindungsqualitätsmetrik einen Leistungssteuerbefehl, der bestimmt worden ist gemäß der höchsten Rückwärtsverbindungsqualitätsmetrik.

12. Vorrichtung nach Anspruch 11, wobei der Satz mit Instruktionen der durch den Prozessor ausführbar ist, zum Behalten des Sektors (100, 102) in der Liste der Teilnehmerstation, falls die bestimmte Rückwärtsverbindungsqualitätsmetrik ausreichend ist einen Satz mit Instruktionen aufweist zum:

Ablehnen der empfangenen Anfragen zum Entfernen eines Sektors (100, 102) von der Liste der Teilnehmerstation.

13. Vorrichtung nach Anspruch 11, die ferner Folgendes aufweist:

einen zweiten Empfänger, der konfiguriert ist zum Messen einer Vorwärtsverbindungsqualitätsmetrik; und einen zweiten Sender bzw. Übertrager, der kommunikativ gekoppelt ist mit dem zweiten Empfänger und zwar konfiguriert zum Kommunizieren von der Teilnehmerstation zu einem Sektor eine Anfrage zum Entfernen des Sektors (100, 102) von der Liste der Teilnehmerstation, falls die bestimmte Vorwärtsverbindungsqualitätsmetrik ungenügend ist.

14. Vorrichtung nach Anspruch 11, die ferner Entfernen eines Sektors (100, 102) von der Liste der Teilnehmerstation aufweist, falls die bestimmte Rückwärtsverbindungsqualitätsmetrik ungenügend ist.

15. Vorrichtung nach Anspruch 11, wobei das Kommunikationssystem das Kommunikationssystem gemäß einem IS-856 Standard aufweist.

16. Verfahren nach Anspruch 11, wobei das Kommunikationssystem das Kommunikationssystem gemäß einem IS-95 Standard aufweist.

17. Verfahren nach Anspruch 11, wobei das Kommunikationssystem das Kommunikationssystem gemäß einem WCDMA Standard aufweist.

18. Verfahren nach Anspruch 11, wobei das Kommunikationssystem das Kommunikationssystem gemäß einem IS-2000 Standard aufweist.

19. Verfahren nach Anspruch 11, wobei das Kommunikationssystem das Kommunikationssystem gemäß einem JSTD-008 Standard aufweist.

20. Ein Verfahren zur Leistungssteuerung einer Teilnehmerstation das Folgendes aufweist:

Messen, bei einer Vielzahl von Sektoren (100, 102) die zu der Liste der Teilnehmerstation gehören, von Rückwärtsverbindungsqualitätsmetriken der Teilnehmerstation (104);
Bestimmen, bei jedem der Sektoren (100, 102), einer Qualitätsmetrik von einer Vorwärtsverbindung, die durch den Sektor (100, 102) an die Teilnehmerstation (104) übertragen bzw. gesendet wird;
**gekennzeichnet durch**:
Bestimmen eines Ungleichgewichts gemäß den gemessenen Rückwärtsverbindungsqualitätsmetriken und der bestimmten Qualitätsmetriken der Vorwärtsverbindungen; und
Senden bzw. Übertragen von dem Sektor mit der höheren Vorwärtsverbindungsqualitätsmetrik eines Leistungssteuerbefehls der gemäß der höheren Rückwärtsverbindungsqualitätsmetrik bestimmt worden ist, falls das Ungleichgewicht existiert;
wobei das Bestimmen des Ungleichgewichts gemäß den gemessenen Rückwärtsverbindungsqualitätsmetriken und den bestimmen Qualitätsmetriken der Vorwärtsverbindungen Folgendes aufweist:
Verkünden eines Ungleichgewichts, falls:
die Vorwärtsverbindungsqualitätsmetrik von einem von der Vielzahl von Sektoren um eine erste Schwelle größer ist als eine Vorwärtsverbindungsqualität des Rests der Vielzahl von Sektoren; und
die gemessene Rückwärtsverbindungsqualitätsmetrik bei dem einen von der Vielzahl, um eine zweite Schwelle kleiner bzw. weniger ist, als die gemessene Rückwärtsverbindungsqualität bei dem Rest der Vielzahl von Sektoren.

21. Verfahren nach Anspruch 20, wobei das Übertragen bzw. Senden von dem Sektor mit der höchsten Vorwärtsverbindungsqualitätsmetrik eines Leistungssteuerbefehls bestimmt wird, gemäß der höchsten Rückwärtsverbindungsqualitätsmetrik, falls das Ungleichgewicht existiert, Folgendes aufweist:

Übertragen von dem Sektor mit der höchsten Vorwärtsverbindungsqualitätsmetrik eines Leistungssteuerbefehls, der bestimmt worden ist gemäß der höchsten Rückwärtsverbindungsqualitätsmetrik falls das Ungleichgewicht für eine vorherbestimmte Zeit existiert.

22. Verfahren nach Anspruch 20, wobei das Messen, bei einer Vielzahl von Sektoren, die zu der Liste der Teilnehmerstation gehören, von Rückwärtsverbindungsqualitätsmetriken bei der Teilnehmerstation (104), die Folgendes aufweist:

Messen, bei zwei der Sektoren (100, 102), die zu der Liste der Teilnehmerstation gehören, von Rückwärtsverbindungsqualitätsmetriken der Teilnehmerstation (104).

23. Eine Vorrichtung zur Leistungssteuerung einer Teilnehmerstation (104) die Folgendes aufweist:

einen Prozessor, der kommunikativ mit dem Empfänger gekoppelt ist; und
ein Speichermedium, das kommunikativ mit dem Prozessor gekoppelt ist und einen Satz mit Instruktionen enthält die durch den Prozessor ausführbar sind zum:
Bestimmen, bei jedem Sektor (100, 102), der zu der Liste gehört, von Rückwärtsverbindungsqualitätsmetriken einer Teilnehmerstation (104);
Bestimmen, bei jedem Sektor (100, 102), der zu der Liste gehört einer Qualitätsmetrik, von einer Vorwärtsverbindung, die durch den Sektor (100, 102) an die Teilnehmerstation (104) übertragen wird; und
**gekennzeichnet durch** die Instruktionen zum
Bestimmen eines Ungleichgewichts gemäß den gemessenen Rückwärtsverbindungsqualitätsmetriken und den bestimmten Qualitätsmetriken von Vorwärtsverbindungen; und
Vorsehen für mindestens den Sektor mit der höchsten Vorwärtsverbindungsqualitätsmetrik eines Leistungssteuerbefehls, der gemäß der höchsten Rückwärtsverbindungsqualitätsmetrik bestimmt worden ist;
wobei der Satz mit Instruktionen, die **durch** den Prozessor ausführbar sind zum Bestimmen von Ungleichgewicht gemäß den gemessenen Rückwärtsverbindungsqualitätsmetriken und den bestimmten Qualitätsmetriken von Vorwärtsverbindungen, einen Satz mit Instruktionen aufweist zum:
Verkünden eines Ungleichgewichts falls:
die Vorwärtsverbindungsqualitätsmetrik von einem von der Vielzahl von Sektoren, um eine erste Schwelle größer ist als eine Vorwärtsverbindungsqualität von dem Rest der Vielzahl von Sektoren; und
die gemessene Rückwärtsverbindungsqualitätsmetrik bei dem einen von der Vielzahl von Sektoren, um eine zweite Schwelle kleiner bzw. weniger ist als die gemessene Rückwärtsverbindungsqualität bei dem Rest von der Vielzahl von Sektoren.

24. Vorrichtung nach Anspruch 23, wobei der Satz mit Instruktionen zum Vorsehen für mindestens den Sektor mit der höchsten Vorwärtsverbindungsqualitätsmetrik eines Leistungssteuerbefehls, der bestimmt worden ist gemäß der höchsten Rückwärtsverbindungsqualitätsmetrik, einen Satz mit Instruktionen aufweist zum:

Vorsehen für mindestens den Sektor mit der höchsten Vorwärtsverbindungsqualitätsmetrik eines Leistungssteuerbefehls, der bestimmt worden ist gemäß der höchsten Rückwärtsverbindungsqualitätsmetrik; falls das Ungleichgewicht für eine vorbestimmte Zeit existiert.

25. Vorrichtung nach Anspruch 23, wobei die Liste aus zwei Sektoren (100, 102) besteht.

**Revendications**

1. Procédé de gestion d'une liste de secteurs aptes à communiquer avec un poste d'abonné (104) dans un système de communication, comprenant :

recevoir une requête de suppression d'un secteur (100, 102) de la liste de postes d'abonné ;
déterminer une métrique de qualité en liaison inverse du poste d'abonné (104) au niveau du secteur (100, 102) ;
maintenir le secteur (100, 102) dans la liste de postes d'abonné si la métrique de qualité en liaison inverse déterminée est suffisante ;

**caractérisé par** le fait de déterminer si un déséquilibre existe quand le secteur est maintenu dans la liste de postes d'abonné;

dans lequel le maintien du secteur (100, 102) dans la liste de postes d'abonné si la métrique de qualité en liaison inverse déterminée est suffisante comprend :

déterminer une métrique de qualité en liaison directe à laquelle un débit de données peut être décodé ; et

établir un seuil de métrique de qualité en liaison directe pour le secteur (100, 102) en accord avec la métrique de qualité en liaison directe déterminée ;

dans lequel ladite détermination de ce qu'un déséquilibre existe comprend :

mesurer au niveau de chaque secteur (100, 102) appartenant à la liste la métrique de qualité en liaison inverse du poste d'abonné (104) ;

déterminer au niveau de chaque secteur (100, 102) appartenant à la liste la métrique de qualité d'une liaison directe transmise par le secteur vers le poste d'abonné ; et

déclarer qu'il y a un déséquilibre si :

la métrique de qualité en liaison directe de l'un de la pluralité de secteurs est supérieure d'un premier seuil à la métrique de qualité en liaison directe du reste de la pluralité de secteurs ; et

la métrique de qualité en liaison inverse mesurée au niveau de l'un de ladite pluralité est inférieure d'un second seuil à la métrique de qualité en liaison inverse mesurée au niveau du reste de la pluralité de secteurs ;

émettre à partir au moins du secteur ayant la métrique de qualité en liaison directe la plus élevée un ordre de commande de puissance déterminé en accord avec la métrique de qualité en liaison inverse la plus élevée si un déséquilibre existe.

2. Procédé selon la revendication 1, dans lequel le maintien du secteur (100, 102) dans la liste de postes d'abonné si la métrique de qualité en liaison inverse déterminée est suffisante comprend :

décliner la requête reçue de suppression d'un secteur (100, 102) de la liste de postes d'abonné.

3. Procédé selon la revendication 1, dans lequel la détermination d'une métrique de qualité en liaison directe à laquelle un débit de données peut être décodé comprend :

déterminer une métrique de qualité en liaison directe à laquelle un débit de données minimum peut être décodé.

4. Procédé selon la revendication 1, comprenant en outre la suppression d'un secteur (100, 102) de la liste de postes d'abonné si la métrique de qualité en liaison inverse déterminée est insuffisante.

5. Procédé selon la revendication 1, dans lequel le système de communication comprend un système de communication selon la norme IS-856.

6. Procédé selon la revendication 1, dans lequel le système de communication comprend un système de communication selon la norme IS-95.

7. Procédé selon la revendication 1, dans lequel le système de communication comprend un système de communication selon la norme wCDMA.

8. Procédé selon la revendication 1, dans lequel le système de communication comprend un système de communication selon la norme IS-2000.

9. Procédé selon la revendication 1, dans lequel le système de communication comprend un système de communication selon la norme JSTD-008.

10. Procédé selon la revendication 1, comprenant en outre le fait de communiquer à partir du poste d'abonné (104) une requête de suppression du secteur de la liste de postes d'abonné si la métrique de qualité en liaison directe déterminée est insuffisante.

11. Dispositif pour gérer une liste de secteurs capables de communiquer avec un poste d'abonné (104) dans un système de communication, comprenant :

un récepteur agencé pour recevoir une requête du secteur (100, 102) de la liste de postes d'abonné ;

un processeur couplé pour communiquer avec le récepteur ; et

un milieu de mémorisation couplé pour communiquer avec le processeur et contenant un ensemble d'instructions exécutables par le processeur pour :

déterminer une métrique de qualité en liaison inverse ;

maintenir le secteur (100, 102) dans la liste de postes d'abonné si la métrique de qualité en liaison inverse déterminée est suffisante, **caractérisé par** des instructions pour déterminer si un déséquilibre existe quand le secteur est maintenu dans la liste de postes d'abonné ; et

dans lequel l'ensemble d'instructions exécutables par le processeur pour maintenir le secteur (100, 102) dans la liste de postes d'abonné si la métrique de qualité en liaison inverse déterminée est suffisante comprend un ensemble d'instructions pour :

déterminer une métrique de qualité en liaison directe pour le secteur (100, 102) à laquelle un débit de données peut être décodé ;

établir un seuil de métrique de qualité en liaison directe en accord avec la métrique de qualité en liaison directe déterminée ;

dans lequel l'ensemble d'instructions exécutables par le processeur pour déterminer si un déséquilibre existe comprend un ensemble d'instructions pour :

déterminer au niveau de chaque secteur (100, 102) appartenant à la liste une métrique de qualité en liaison inverse du poste d'abonné ;

déterminer au niveau de chaque secteur (100, 102) appartenant à la liste la métrique de qualité d'une liaison directe émise par le secteur (100, 102) vers le poste d'abonné (104) ; et

déclarer un déséquilibre si :

la métrique de qualité en liaison directe de l'un de la pluralité de secteurs est supérieure à la métrique de qualité en liaison directe du reste de la pluralité de secteurs d'un premier seuil ; et

la métrique de qualité en liaison inverse mesurée au niveau de l'un de ladite pluralité est inférieure à la métrique de qualité en liaison inverse mesurée au niveau du reste de la pluralité de secteurs d'un second seuil ;

si un déséquilibre existe, fournir au moins du secteur ayant la métrique de qualité en liaison directe la plus élevée un ordre de commande de puissance déterminé en accord avec la métrique de qualité en liaison inverse la plus élevée.

**12.** Dispositif selon la revendication 11, dans lequel l'ensemble d'instructions exécutables dans le processeur pour maintenir le secteur (100, 102) dans la liste de postes d'abonné si la métrique de qualité en liaison inverse déterminée est suffisante comprend un ensemble d'instructions pour :

décliner la requête reçue de suppression d'un secteur (100, 102) de la liste de postes d'abonné.

**13.** Dispositif selon la revendication 11, comprenant en outre :

un second récepteur agencé pour déterminer une métrique de qualité en liaison directe ; et
un second émetteur couplé pour communiquer avec le second récepteur agencé pour communiquer à partir du poste d'abonné une requête de secteur pour supprimer le secteur (100, 102) de la liste de postes d'abonné si la métrique de qualité en liaison directe déterminée est insuffisante.

**14.** Dispositif selon la revendication 11, comprenant en outre la suppression d'un secteur (100, 102) de la liste de postes d'abonné si la métrique de qualité en liaison inverse déterminée est insuffisante.

**15.** Dispositif selon la revendication 11, dans lequel le système de communication comprend un système de communication selon la norme IS-856.

**16.** Dispositif selon la revendication 11, dans lequel le système de communication comprend un système de communication selon la norme IS-95.

**17.** Dispositif selon la revendication 11, dans lequel le système de communication comprend un système de communication selon la norme wCDMA.

**18.** Dispositif selon la revendication 11, dans lequel le système de communication comprend un système de communication selon la norme IS-2000.

**19.** Dispositif selon la revendication 11, dans lequel le système de communication comprend un système de communication selon la norme JSTD-008.

**20.** Procédé de commande de puissance d'un poste d'abonné comprenant :

mesurer au niveau d'une pluralité de secteurs (100, 102) appartenant à la liste de postes d'abonné une métrique de qualité en liaison inverse du poste d'abonné (104) ;

déterminer au niveau de chaque secteur (100, 102) une métrique de qualité d'une liaison directe transmise par le secteur (100, 102) vers le poste d'abonné (104) ; et

**caractérisé par** :

déterminer un déséquilibre en accord avec la métrique de qualité en liaison inverse mesurée et la métrique de qualité déterminée des liaisons directes ; et

émettre à partir du secteur ayant la métrique de qualité en liaison directe la plus élevée un ordre de commande de puissance déterminé en accord avec la métrique de qualité en liaison inverse la plus élevée si le déséquilibre existe ;

dans lequel la détermination du déséquilibre selon la métrique de qualité en liaison inverse mesurée et la métrique de qualité déterminée des liaisons directes comprend :

déclarer qu'il y a un déséquilibre si :

la métrique de qualité en liaison directe de l'un de la pluralité de secteurs est supérieure d'un premier seuil à la métrique de qualité en liaison directe du reste de la pluralité de secteurs ; et

la métrique de qualité en liaison inverse mesurée au niveau de l'un de ladite pluralité est inférieure d'un second seuil à la métrique de qualité en liaison inverse mesurée au niveau du reste de la pluralité de secteurs.

**21.** Procédé selon la revendication 20, dans lequel l'émission à partir du secteur ayant la métrique de qualité en liaison directe la plus élevée d'un ordre de commande de puissance déterminé en accord avec la métrique de qualité en liaison inverse la plus élevée si le déséquilibre existe comprend :

transmettre à partir du secteur ayant la métrique de qualité en liaison directe la plus élevée un ordre de commande de puissance déterminé en accord avec la métrique de qualité en liaison inverse la plus élevée si le déséquilibre existe pendant une durée prédéterminée.

**22.** Procédé selon la revendication 20, dans lequel la mesure au niveau d'une pluralité de secteurs appartenant à la liste de postes d'abonné d'une métrique de qualité en liaison inverse du poste d'abonné (104) comprend :

mesurer au niveau d'au moins deux secteurs (100, 102) appartenant à la liste de postes d'abonné une métrique de qualité en liaison inverse du poste d'abonné (104).

**23.** Dispositif de commande de puissance d'un poste d'abonné (104) comprenant :

un processeur couplé pour communiquer avec le récepteur ; et

un milieu de mémorisation couplé pour communiquer avec le processeur et contenant un ensemble d'instructions exécutables par le processeur pour :

déterminer au niveau de chaque secteur (100, 102) appartenant à la liste une métrique de qualité en liaison inverse d'un poste d'abonné (104) ;

déterminer au niveau de chaque secteur (100, 102) appartenant à la liste une métrique de qualité d'une liaison directe émise par le secteur (100, 102) vers le poste d'abonné (104) ; et

**caractérisé par** des instructions pour :

déterminer un déséquilibre en accord avec la métrique de qualité en liaison inverse mesurée et la métrique de qualité déterminée des liaisons directes ; et

fournir au moins au secteur ayant la métrique de qualité en liaison directe la plus élevée un ordre de commande de puissance déterminé en accord avec la métrique de qualité en liaison inverse la plus élevée ;

dans lequel l'ensemble d'instructions exécutables par le processeur pour déterminer le déséquilibre en fonction de la métrique de qualité en liaison inverse mesurée et de la métrique de qualité déterminée des liaisons directes comprend un ensemble d'instructions pour :

déclarer un déséquilibre si :

la métrique de qualité en liaison directe de l'un de la pluralité de secteurs est supérieure d'un premier seuil à la métrique de qualité en liaison directe du reste de la pluralité de secteurs ; et

la métrique de qualité en liaison inverse mesurée au niveau d'au moins un de la pluralité de secteurs est inférieure d'un second seuil à la métrique de qualité en liaison inverse mesurée au niveau du reste de la pluralité de secteurs.

24. Dispositif selon la revendication 23, dans lequel l'ensemble d'instructions pour fournir audit au moins un secteur de métrique de qualité en liaison directe la plus élevée un ordre de commande de puissance déterminé en accord avec la métrique de qualité en liaison inverse la plus élevée comprend un ensemble d'instructions pour :

fournir audit au moins un secteur de métrique de qualité en liaison directe la plus élevée un ordre de commande de puissance déterminé en accord avec la métrique de qualité en liaison inverse la plus élevée si le déséquilibre existe pendant une durée prédéterminée.

25. Dispositif selon la revendication 23, dans lequel la liste comprend deux secteurs (100, 102).

FIG. 1

FIG. 2